Europäisches Patentamt

(19) European Patent Office

Office européen des brevets

(11) Numéro de publication: **0 1 1 5 995**
**B1**

(12) FASCICULE DE BREVET EUROPEEN

(45) Date de publication du fascicule du brevet:
22.06.88

(21) Numéro de dépôt: **84400197.4**

(22) Date de dépôt: **30.01.84**

(51) Int. Cl.⁴: **A 01 F 15/14, G 05 B 19/42**

(54) Procédé et dispositif de commande des déplacements d'une pièce et leur utilisation dans une machine de ramassage de foin.

(30) Priorité: **03.02.83 FR 8301696**

(43) Date de publication de la demande:
**15.08.84 Bulletin 84/33**

(45) Mention de la délivrance du brevet:
**22.06.88 Bulletin 88/25**

(84) Etats contractants désignés:
**AT BE CH DE GB IT LI LU NL SE**

(56) Documents cités:
**EP - A - 0 060 366
FR - A - 2 025 189
FR - A - 2 492 555
FR - A - 2 510 278**

**LE NOUVEL AUTOMATISME, vol. 26, no. 26,
novembre/décembre 1981, pages 56-71, Paris, FR. M.
FERRETTI: "Panorama de 150 manipulateurs et robots
industriels"**

(73) Titulaire: **ELECTROMECA S.A., Z.A. Avenue Patis
Bouillon Chatillon sur Thouet, F-79200 Parthenay (FR)**

(72) Inventeur: **Herbert, Jacky 28 Avenue Antoine de Saint
Exupéry, Chatillon Sur Thouet, F-79200 Parthenay (FR)**

(74) Mandataire: **Thibon-Littaye, Annick, Cabinet A.
THIBON-LITTAYE 11 rue de l'Etang,
F-78160 Marly-le-Roi (FR)**

## Description

La présente invention concerne le ficelage automatique de balles de foin, étant entendu que l'on désigne par le terme de foins, toutes sortes de fourrages ou végétaux, ramassés dans les champs une fois fauchés.

Pour effectuer le ficelage des balles de foin, on connaît des machines automatiques qui entourent d'une ficelle chaque balle, dès qu'elle est formée. En fait, la balle se forme pendant le déplacement de la machine dans le champ, par accumulation du foin dans une chambre cylindrique dans laquelle il est aspiré tangentiellement et entraîné en rotation, et la ficelle est enroulée autour grâce à cette même rotation. L'extrémité libre de la ficelle est amenée en périphérie de la belle lorsque celle-ci a pratiquement atteint le diamètre désiré, et tandis que la balle continue à tourner, on déplace le point d'amenée de la ficelle parallèlement à l'axe de rotation, de sorte que la ficelle s'enroule autour de la balle en spirale hélicoïdale, éventuellement suivant plusieurs hélices juxtaposées ou superposées. La ficelle est ensuite coupée et la balle est évacuée de la chambre, qui devient donc disponible pour la formation de la balle suivante.

Mais ces machines connues ne sont pas encore satisfaisantes, essentiellement par manque de souplesse. L'utilisateur doit effectuer le ficelage manuellement, c'est-à-dire qu'il doit positionner la ficelle au jugé, sans droit à l'erreur, sous peine de mettre une ou plusieurs spires supplémentaires. Cependant on a proposé en outre de réaliser des machines assurant un déplacement automatique de la ficelle selon un programme prédéterminé. Ces machines permettent de libérer l'agriculteur pour la conduite du tracteur de la machine. Elles ont par contre l'inconvénient de manquer encore plus de souplesse que les machines demandant l'intervention manuelle de l'agriculteur. Ainsi dans une machine décrite dans la demande de brevet européen 0 060 366, la ficelle se déplace automatiquement dans un sens aller puis dans un sens retour de manière automatique.

Par rapport à un tel état de la technique, l'invention apporte les avantages de l'automaticité, tout en permettant à l'agriculteur de profiter au mieux de son expérience de ficelage manuel dans la définition du mode de ficelage pour chaque foin et chaque champ particuliers. Dans ce but l'invention permet de provoquer l'arret du déplacement ainsi que l'inversion du sens de déplacement dans des positions intermédiaires de la ficelle autres que les deux positions extrêmes ci-dessus.

L'invention a ainsi pour objet une machine de ramassage de foin en balles à ficelage automatique des balles, ayant toutes les caractéristiques définies dans la revendication 3.

Le programme de ficelage appliqué n'est donc déterminé ni par construction, ni par des calculs théoriques complexes, mais bien par l'agriculteur lui-même alors qu'il opère suivant ses habitudes et sa pratique des différents foins.

Dans la première phase de fonctionnement de la machine, qui permet en quelque sorte son apprentissage, les caractéristiques des étapes successives des déplacements commandés manuellement sont enregistrées automatiquement. Suivant un mode de réalisation préféré de l'invention, les déplacements sont en général suffisamment définis, dans la pratique de l'application au ficelage des balles de foin, par la durée de chaque étape et le sens de déplacement du moteur d'entraînement pendant l'étape, en donnant à ce sens trois valeurs possibles, correspondant respectivement à l'avance, le recul et l'arrêt. Le cas échéant, il peut être avantageux d'y ajouter un autre paramètre, comme d'autres valeurs de la vitesse. On peut ainsi définir dans le programme de ficelage, toutes sortes de combinaisons de motifs qui seront ensuite reproduits automatiquement sur les autres balles. Aux étapes successives de déplacement correspondent des spires plus ou moins serrées et plus ou moins nombreuses, la vitesse de rotation de la balle étant, elle, généralement constante. L'opérateur aura par exemple toute liberté pour programmer, dans n'importe quel ordre, des spires serrées pour ancrer la ficelle à une extrémité de la balle, des spires lâches pour parcourir rapidement toute la longueur de la balle cylindrique, des spires plus serrées recouvrant les spires lâches, éventuellement en plusieurs couches à sens d'enroulement opposés superposées, et tout ceci suivant les tours de main qu'il aura acquis par l'expérience, sans qu'il ait besoin de faire intervenir des connaissances mathématiques ou théoriques et sans qu'il soit gêné par des normes d'automatisation imposées.

La solution proposée pour commander le ficelage dans la machine de ramassage de foin selon l'invention est susceptible de trouver utilité dans d'autres applications, pour commander les déplacements de toutes sortes de pièces, que ces déplacements soient déterminés directement à partir de moteurs ou par l'intermédiaire de relais ou tous systèmes de transmission.

Les solutions connues pour permettre le déroulement programmé des commandes de déplacement d'une pièce, le positionnement d'un outil par exemple, font appel soit à une programmation temporelle câblée, en boucle ouverte, soit au comptage des pas d'un moteur pas à pas, soit au contrôle d'un capteur détectant la présence de la pièce en des positions prédéterminées. La première solution manque évidemment de souplesse, les moteurs pas à pas sont d'un prix souvent déraisonnable, et les contrôles par capteurs doivent être réservés aux cas où la précision recherchée justifie leur coût élevé.

La présente invention permet d'éviter ces inconvénients grâce à l'enregistrement, dans une phase d'apprentissage au cours de laquelle les commandes sont réalisées manuellement, d'un programme de commande reproductible automatiquement, par des paramètres d'étapes successives comprenant au moins, pour chaque étape, la durée du déplacement et son sens, ainsi que la durée de l'arrêt.

Ainsi, l'invention a aussi pour objet un procédé de ramassage de foin en balles ayant toutes les caractéristiques définies dans la revendication 1.

Le sens de déplacement à chaque étape est sélectionné entre une position d'avance, une position de recul et une position d'arrêt, sans qu'il soit en général nécessaire de faire intervenir d'autres valeurs de vitesse de déplacement. De son côté, la position d'arrêt est certainement souhaitable lorsque dans la phase de reproduction du programme enregistré, le déroulement des commandes doit être automatique de la première à la dernière étape. Mais cette position d'arrêt peut aussi fort bien devenir inutile dans d'autres cas, si par exemple on désire laisser toujours à l'initiative de l'opérateur le démarrage de chacune des étapes successives du programme. Le dispositif selon l'invention peut donc comporter des moyens pour commander à volonté la validation de l'enregistrement des paramètres de chacune des étapes successives, en mode de fonctionnement en phase d'apprentissage et le déclenchement des étapes, étape par étape, en mode de fonctionnement en déroulement automatique de programme.

Les deux possibilités peuvent naturellement exister en combinaison dans une même machine, moyennant que l'opérateur puisse exercer une sélection entre elles au départ.

Selon d'autres variantes de réalisation de l'invention, la durée de chacune des étapes successives peut être fixée à des valeurs prédéterminées, identiques ou différentes suivant la position sélectionnée pour le sens de déplacement. Suivant les cas d'application, on peut aussi se dispenser d'enregistrer une durée pour chaque étape du programme. Mais le déroulement automatique du programme laisse alors en fait le soin à l'opérateur de commander le démarrage ainsi que l'arrêt de chaque étape, ce qui demande de sa part une présence que le plus souvent, on cherche plutôt à éviter.

L'invention sera maintenant plus complètement décrite dans le cadre de son application au ficelage des balles de foin, dans un mode de réalisation particulier et nullement limitatif qui est illustré par les figures 1 à 4 dans lesquelles:

— la figure 1 illustre le principe du ramassage de foin par une machine selon l'invention;

— la figure 2 représente schématiquement la composition d'un dispositif de commande selon l'invention compris dans cette machine;

— la figure 3 résume un premier organigramme de fonctionnement de ce dispositif;

— la figure 4 illustre de la même manière un second mode de fonctionnement, utilisé en variante.

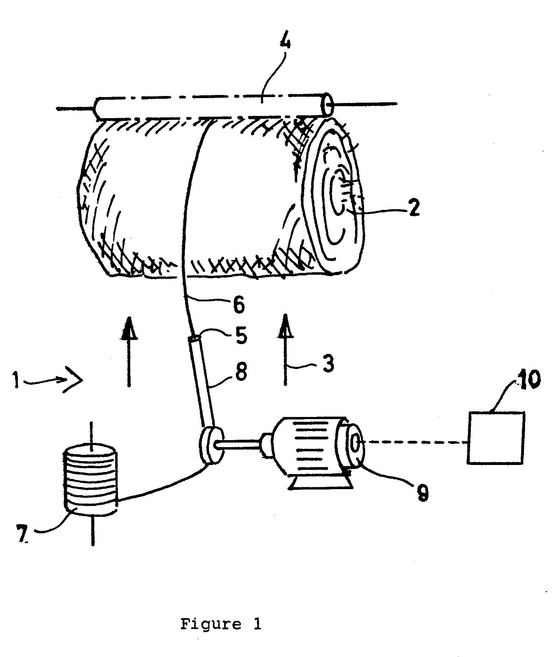

On n'a pas représenté sur la figure 1 l'ensemble de la machine de ramassage de foin équipée conformément à l'invention, les élémens non représentés étant tout à fait classiques en eux-mêmes dans les machines existantes. Cette machine ramasse le foin et le forme en balles pendant qu'elle est entraînée à travers les champs par un tracteur. Elle comporte à cet effet une chambre cylindrique dans laquelle se forme la balle de foin 2, de même forme. Cette chambre peut être limitée par des rouleaux, courroies ou chaînes. Elle peut être de dimensions variables ou fixes selon les flèches 3, par une ou plusieurs fentes d'entrée dans la chambre, orientée suivant une génératrice. Il est aspiré et entraîné en rotation par des rouleaux rotatifs 4 disposés en périphérie de la chambre longitudinalement. Il peut s'agir par exemple de rouleaux limitant la chambre qui sont montés sur des supports en bout du volume cylindrique de manière à pouvoir s'écarter plus ou moins de l'axe. La rotation forme progressivement le foin en balle cylindrique par enroulement sur lui-même, tandis qu'il s'accumule dans la chambre jusqu'à la remplir complètement. On réalise alors le ficelage de la balle avant de l'éjecter de la chambre. Le déplacement de la machine dans le champ est en général interrompu pendant le ficelage, mais la balle continue à être entraînée en rotation, alors qu'il n'y a plus admission de fin. L'éjection de la balle ficelée terminée s'effectue par ouverture de la chambre.

Le ficelage est effectué au moyen d'une ficelle 6, débitée en continu depuis une bobine d'alimentation 7. L'extrémité libre de cette ficelle passe à travers un guide 8 qui permet de l'amener face à la fente d'entrée du foin dans la chambre, pour y être admise en périphérie de la balle. Le guide 8 est un tube mobile autour d'un point fixe de manière que son extrémité 5 constituant le point d'amenée d la ficelle à l'entrée de la fente de la chambre se déplace le long de celle-ci, dans l'un ou l'autre sens, sous l'effet d'un moteur 9, assurant l'entraînement du guide. Entre deux opérations de ficelage, la ficelle est rendue inactive par le fait que le guide 8 est basculé jusqu'à une position d'attente où son extrémité est située en dehors de la zone d'aspiration du foin, sur le côté de la chambre. La ficelle est coupée après chaque opération de ficelage, entre deux balles successives, du fit qu'à son retour en position d'attente le guide passe devant un outil tranchant qui est schématiquement représenté sous la forme d'un couteau 1.

Le ficelage de chaque balle est réalisé par déplacement du guide 8 suivant un programme de ficelage qui est défini au début d'une période de ramassage de foin pour une qualité de foin donnée et qui se reproduit ensuite automatiquement sur les balles successives. Le ficelage peut être ainsi adapté à volonté du type de foin à emballer. Plus précisément, les commandes de déplacement du guide 8 se répètent, identiques à celles qui ont été effectuées manuellement pour le ficelage d'une première balle, dans ce que l'on peut appeler une phase d'apprentissage, comme on le comprendra par la suite.

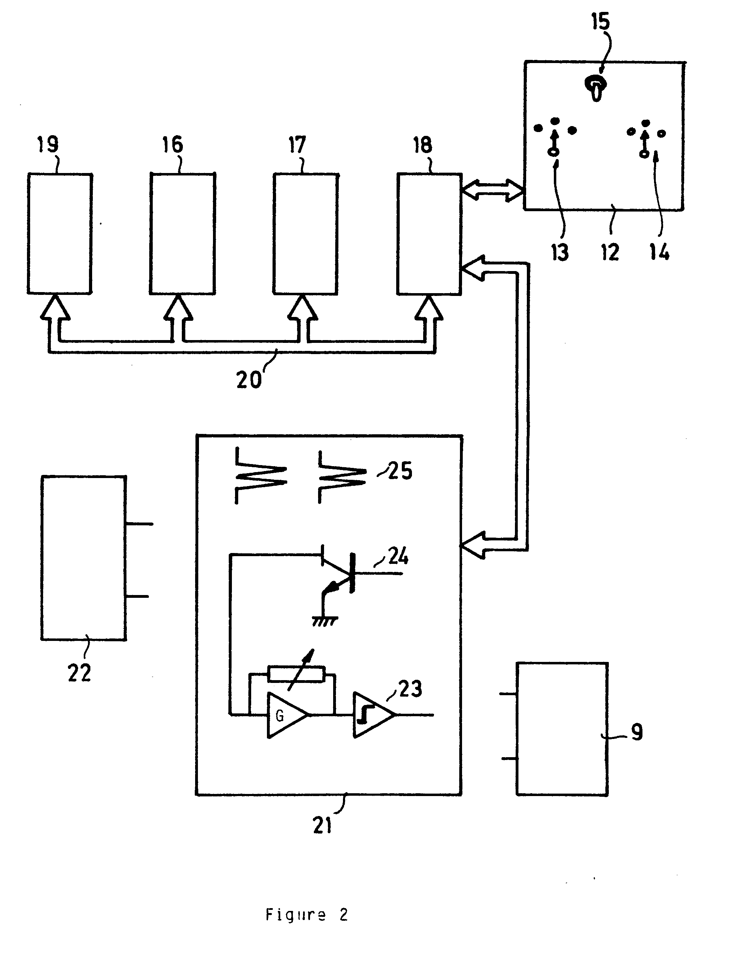

A cette fin, la machine comporte un dispositif à microprocesseur 10, qui apparaît comme un coffret électronique sur la figure 1, et qui comprend, conformément à la figure 2, le microprocesseur lui-même 19, un tableau de commande 12, sur lequel sont accessibles deux boutons à trois positions 13 et 14, plus un bouton marche/arrêt 15, un circuit de contrôle 21 comportant des relais de transmission de la puissance nécessaire au fonctionnement du moteur 9, une source d'énergie 22, constituée par une batterie d'alimentation en courant continu sous 12 volts. Le microprocesseur 19 est relié par un bus 20 à une mémoire vive intégrée 16, à une mémoire morte 17 contenant le logiciel de fonctionnement, et à un interface programmable 18 par l'intermédiaire duquel s'effectuent les transferts des signaux d'entrée et de sortie entre les différents éléments, en particulier le tableau 12 et le circuit de contrôle 21 du moteur.

Sur le tableau de commande, le bouton 15 est un simple interrupteur de mise sous tension, qui sert aussi de remise à zéro effaçant tout programme commencé jugé erroné.

Le bouton 13 («MODE») est utilisé pour définir le mode de fonctionnement. Il présente trois positions possibles, dont l'une est seulement momentanée. La position «PROG» détermine le fonctionnement en phase d'apprentissage, pour l'enregistrement d'un programme. Ensuite, chaque impulsion donnée de la position neutre à la position «AUTO» déclenche le fonctionnement en déroulement automatique de programme pour une séquence identique à celle qui a été enregistrée.

Le bouton 14 («MANU») est utilisé en phase d'apprentissage pour commander les étapes successives de la séquence. Il présente trois positions dont deux sont momentanées: une position avance («AV») qui commande la rotation du moteur dans un sens, et donc le déplacement du guide dans un sens correspondant, une position de recul («AR») qui détermine la rotation et le déplacement dans le sens opposé. La position neutre intermédiaire est la position d'arrêt, où le guide est immobile.

Le temps que le bouton reste en position d'arrêt, le temps que l'opérateur le maintient en position d'avance, le temps qu'il le maintient en position de recul, représentent autant d'étapes successives de la séquence en cours de programmation. La vitesse de rotation du moteur n'est pas autrement réglable. Les circuits électroniques enregistrent chaque étape par la position sélectionnée et la durée pendant laquelle elle est maintenue.

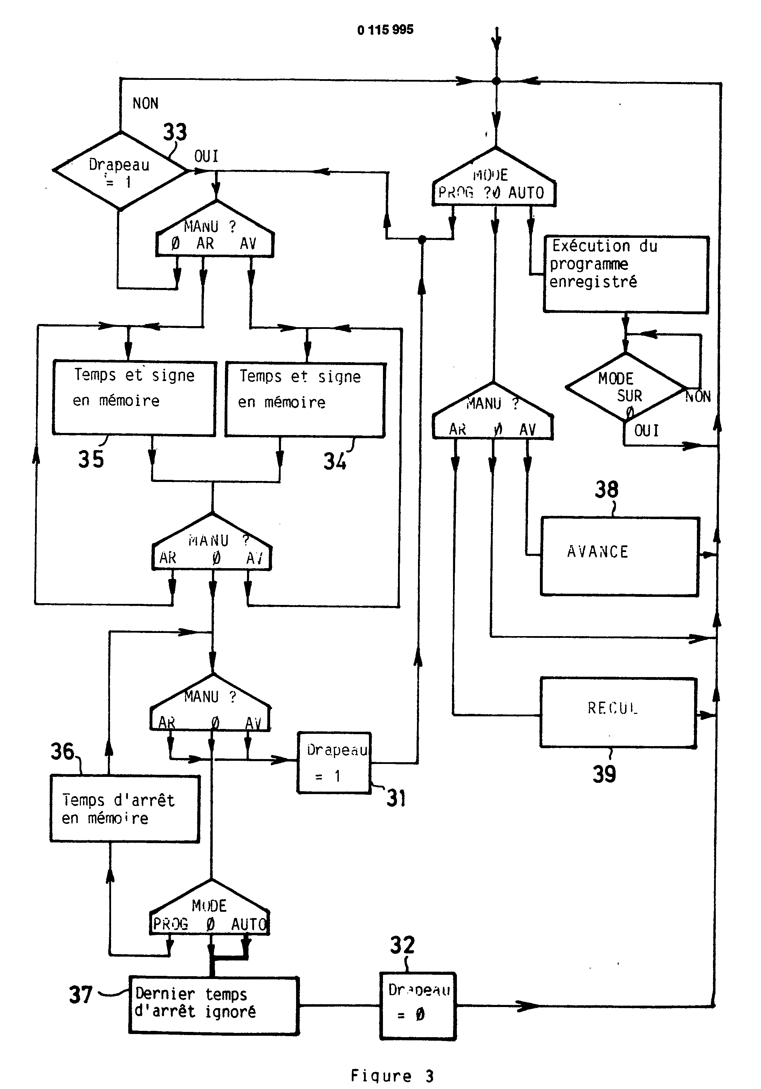

Ces diverses opérations sont illustrées sur l'organigramme de la figure 3. On y a fait apparaître les interventions d'un drapeau, qui et affiché en 31 quand l'opération revient en position d'arrêt après un déplacement en avance ou recul, effacé en 32 en fin de séquence quand l'opérateur supprime le mode «PROG», et testé en 33 si le bouton «MANU» est en position d'arrêt quand on déclenche le mode «PROG». Ce drapeau protège ainsi le programme enregistré, en assurant qu'il ne soit pas effacé si l'opérateur amène le bouton «MODE» par mégarde sur «PROG», et revient alors aussitôt sans procéder à aucune commande de déplacement en avance ou recul.

En 34 et 35, on enregistre la durée et le signe du déplacement, respetivement en cas d'avance et en cas de recul, et en 36 on enregistre la durée de l'arrêt. A la lecture du programme, le dernier temps d'arrêt est ignoré (en 37). On voit d'autre part que l'avance et le recul du guide commandé peuvent être assurés, en 38 et 39, sans enregistrement des paramètres correspondants, par manœuvre du bouton «MANU» alors que le bouton «MODE» est en position neutre; ainsi un programme préalablement enregistré n'est pas perturbé.

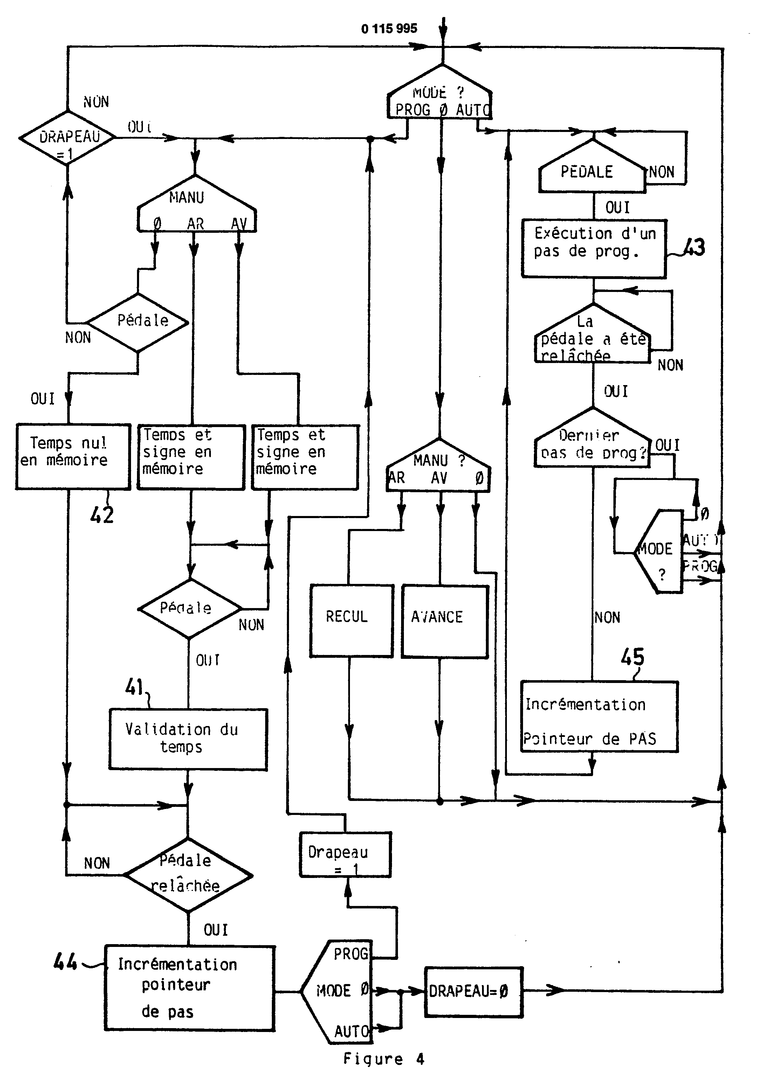

Le dispositif installé sur la machine décrite propose, au niveau du logiciel qu'il renferme, un choix entre la version que l'on a supposée utilisée dans ce qui précède et la version dont la mise en œuvre est illustrée par l'organigramme de la figure 4.

Cette seconde version demande l'utilisation d'une pédale, en plus des boutons «MANU» et «MODE». Cette pédale sert à déclencher les différentes étapes du programme une à une («pas à pas»), aussi bien à l'enregistrement dans la phase d'apprentissage qu'à la lecture en mode «AUTO». En 41, la durée et le signe d'un déplacement (avance ou recul) attendent qu'un coup de pédale soit donné pour que leur enregistrement soit validé. Dans le cas où le coup de pédale est donné en position d'arrêt, c'est un temps nul qui, en 42 est mis en mémoire. A la lecture, la position «AUTO» momentanée du bouton «MODE» autorise le déroulement du programme enregistré en se plaçant au début de la séquence, mais les étapes successives sont exécutées pas à pas, en 43, à chaque coup de pédale. Les pas sont comptés, à l'enregistrement en 44, à la lecture en 45. Pour le reste, les commandes «MODE» et «MANU» sont utilisées comme dans la première version, ainsi que le drapeau.

Naturellement, l'invention n'est nullement limitée par les précisions qui ont été apportées dans le cadre de la description d'un mode de réalisation particulier. Le dispositif et la machine selon l'invention, peuvent, d'autre par, recevoir divers perfectionnements. On pourra prévoir par exemple des arrêts de sécurité commandés par un limiteur de couple monté sur le moteur ou par des butées actionnées par le guide d'amenée de la ficelle en fin de course. Un système de détection de butée par mesure de courant a ainsi été schématisé en 23 dans le circuit 21 de la figure 2, à côté de deux relais 25, qui aiguillent le courant dans le moteur en fonction du sens commandé, et d'un transistor de puissance 24 qui assure les commutations et permet de bloquer l'alimentation du moteur en courant en cas de dépassement d'un seuil de tension prédéterminé.

Par ailleurs des mémoires non volatiles peuvent permettre de conserver des séquences de programme enregistrées. On pourrait aussi enregistrer plusieurs séquences différentes, parmi lesquelles le choix serait fait par un commutateur supplémentaire. On peut aussi, dans le cadre du programme, à l'enregistrement et à la lecture, commander des fonctions auxiliaires, comme la mise en route d'une électrovanne, d'un avertiseur, ou d'un voyant.

Bien d'autres variantes peuvent encore être apportées aux divers éléments décrits sans sortir du cadre de la présente invention.

**Revendications**

1. Procédé de ramassage de foin en balles, dans une machine comportant une chambre cylindrique de formation des balles dans laquelle le foin est aspiré tangentiellement et entraîné en rotation autour de l'axe de la chambre, un guide (8) d'amenée de l'extrémité d'une ficelle en périphérie d'une balle en fin de formation de celle-ci dans ladite chambre, et des moyens de déplacement dudit guide devant l'entrée de foin dans la chambre dans deux sens opposés entre deux positions extrêmes du guide, caractérisé en ce que dans une phase d'apprentissage, on commande manuellement les déplacements dudit guide (8) pour assurer le ficelage d'une première balle, et l'on détermine un progamme de ficelage reproductible par enregistrement automatique de paramètres d'étapes successives comprenant au moins, pour chaque étape, la durée de déplacement du guide et son sens, le sens de déplacement étant sélectionné parmi une position d'avance, une position de recul et une position d'arrêt, correspondant à une position du guide intermédiaire entre lesdites positions extrêmes, et en ce que pour chacune des balles suivantes, on commande automatiquement le déplacement du guide suivant ledit programme de ficelage.

2. Procédé selon la revendication 1, caractérisé en ce que la vitesse de déplacement du guide, dans les positions d'avance et de recul, est constante.

3. Machine de ramassage de foin en balles, à ficelage automatique des balles, comportant une chambre cylindrique de formation des balles dans laquelle le foin est aspiré tangentiellement et entraîné en rotation autour de l'axe de la chambre, un guide (8) d'amenée de l'extrémité d'une ficelle en périphérie d'une balle en fin de formation de celle-ci dans ladite chambre, et des moyens de déplacement dudit guide devant l'entrée de foin dans la chambre réalisant un déplacement automatique du guide au moins dans un sens d'avance et dans un sens de recul entre deux positions extrêmes, caractérisée en ce qu'elle comporte un dispositif de commande des déplacements dudit guide (8) pour ficeler les balles successives, comprenant des moyens (13) pour définir un mode de fonctionnement en phase d'apprentissage et un mode de fonctionnement en déroulement automatique d'un programme de ficelage reproductible préalablement enregistré, des moyens (14) opératifs en phase d'apprentissage pour commander manuellement les déplacements dudit guide pour ficeler une première balle par sélection de paramètres d'étapes successives comprenant au moins, pour chaque étape, la durée de l'étape et le sens de déplacement, choisi parmi une position d'avance, une position de recul et une position d'arrêt correspondant à une position du guide intermédiaire ente lesdites positions intermédiaires, et des moyens (10) pour enregistrer alors, sous forme de programme reproductible utilisable pour les balles suivantes, lesdits paramètres des étapes successives.

4. Machine selon la revendication 3, caractérisée en ce qu'elle comporte des moyens pour commander à volonté la validation de l'enregistrement des paramètres de chacune des étapes successives, en mode de fonctionnement en phase d'apprentissage, et le déclenchement des étapes, étape par étape, en mode de fonctionnement en déroulement automatique de programme.

5. Machine selon la revendication 3 ou 4, caractérisée en ce qu'elle comporte en outre des moyens (13) pour définir un mode de fonctionnement où les déplacements du guide sont commandés manuellement sans que les paramètres des étapes correspondantes soient enregistrés.

**Patentansprüche**

1. Verfahren zum Bergen von Heu in Ballen, in einer Rundballenpressen-Maschine, die eine zylindrische Kammer zur Formung der Ballen umfaßt, in die das Heu tangentiell eingesogen und in eine Drehung um die Achse der Kammer versetzt wird, mit einem Mitnehmer (8) zum Führen eines Fadenendes um die Peripherie eines Ballens, um diesen in der Kammer zu formen, und mit Mitteln zum Bewegen des Mitnehmers vor dem Eintritt des Heues in die Kammer in zwei gegensätzliche Richtungen zwischen zwei extremen gegenüberliegenden Stellungen des Mitnehmers, dadurch gekennzeichnet, daß in einer Einleitungsphase die Bewegungen des Mitnehmers (8) manuell gestellt werden, wobei ein erster Ballen geschnürt wird, und daß ein reproduzierbares Verschnürungsprogramm erstellt wird durch das automatische Speichern von Parametern aufeinanderfolgender Schritte, die für jeden Schritt wenigstens die Zeitdauer der Bewegung des Mitnehmers und seine Richtung enthalten, wobei die Richtung der Bewegung erfaßt wird anhand einer Vorwärts-, Rückwärts- oder Halteposition, entsprechend einer Zwischenposition des Mitnehmers zwischen den genannten extremen Positionen, und dadurch, daß für jeden der folgenden Ballen programmiert eine Bewegung des Mitnehmers gemäß dem genannten Verschnürungsprogramm gesteuert wird.

2. Verfahren gemäß Anspruch 1, dadurch gekennzeichnet, daß die Bewegungsgeschwindigkeit des Mitnehmers in den Vorwärts- und Rückwärtspositionen konstant ist.

3. Maschine zum Bergen von Heu in Ballen, mit automatischer Verschnürung der Ballen, die eine zylindrische Kammer zur Formung der Ballen umfaßt, in die das Heu tangentiell eingesogen und in eine Drehung um die Achse der Kammer versetzt wird, einem Mitnehmer (8) zum Führen eines Fadenendes um die Peripherie eines Ballens, um diesen in der Kammer zu formen, und mittels Bewegung des besagten Mitnehmers vor dem Eintritt des Heues in die Kammer, wobei eine gesteuerte Bewegung des Mitnehmers wenigstens in einer Vorwärts- und einer Rückwärts-Bewegung zwischen zwei extremen Positionen erzeugbar ist, dadurch gekennzeichnet, dass die Maschine Steuervorrichtungen für die Bewegung des genannten Mitnehmers (8) zur Verschnürung der aufeinanderfolgenden Ballen enthält, die Mittel (13) zur Festlegung eines Funktionsmodus in der Einleitungsphase und eines Funktionsmodus beim automatischen Ablauf eines reproduzierten Programmes zur Verschnürung enthält, das vorab in der Einleitungsphase aufgezeichnet wird, mit Einstellungsvorrichtungen (14) zur manuellen Festlegung der Bewegungen des genannten Mitnehmers zum Verschnüren eines ersten Ballens, durch die Auswahl von Parametern sukzessiver Schritte, die wenigstens für jeden Schritt die Zeitdauer des Schrittes und die Bewegungsrichtung enthalten, erfaßt aus einer Vorwärts-, einer Rückwärts- und einer Halteposition, entsprechend einer Zwischenposition des Mitnehmers zwischen den beiden Extrempositionen, und dadurch, daß sie eine Vorrichtung (10) zur Aufzeichnung der genannten Parameter in Folgeschritten in Form eines reproduzierbaren Programmes zur Anwendung auf die folgenden Ballen umfaßt.

4. Maschine gemäß Anspruch 3, dadurch gekennzeichnet, daß sie Vorrichtungen in Form von Funktionsmodussen zur willkürlichen Festlegung der Gültigkeit der Aufzeichnungen der Parameter jeder der Folgeschritte enthält, und zwar während der Einleitungsphase sowie während des automatischen Ablaufes des Programmes für die Auslösung der Schritte in einer Schritt-für-Schritt-Folge.

5. Maschine gemäß den Ansprüchen 3 oder 4, dadurch gekennzeichnet, daß sie außerdem Vorrichtungen (13) enthält, um einen Funktionsmodus festzulegen, gemäß dem die Bewegungen des Mitnehmers manuell einstellbar sind, ohne daß die Parameter der entsprechenden Schritte aufgezeichnet werden.

## Claims

1. Method of gathering hay to form bales in a machine provided with a cylindrical chamber for the formation of bales in which the hay is sucked-in tangentially and driven in rotation about the axis of the chamber, a guide (8) for bringing the end of a length of twine to the periphery of a bale at the end of formation of said bale within said chamber, and means for displacing said guide in front of the hay admission inlet of said chamber in two opposite directions between two end positions of the guide, characterized in that, in a trial stage, the displacements of said guide (8) are controlled by hand so as to tie a first bale with twine and a reproducible typing programme is determined by automatic recording of parameters of successive steps involving in the case of each step at least the time of displacement of the guide and its direction, the direction of displacement being selected from a forward-motion position, a reverse-motion position and a stop position corresponding to an intermediate position of the guide between said end positions and that, in the case of each of the following bales, the displacement of the guide in accordance with said typing programme is controlled automatically.

2. Method in accordance with claim 1, characterized in that the speed of displacement of the guide in the forward-motion and reverse-motion positions is constant.

3. Machine for gathering hay to form bales with automatic typing of bales, including a cylindrical chamber for the formation of bales in which the hay is sucked-in tangentially and driven in rotation about the axis of the chamber, a guide (8) for bringing the end of a length of twine to the periphery of a bale at the end of formation of said bale within said chamber, and means for displacing said guide in front of the hay admission inlet of said chamber and for producing an automatic displacement of the guide at least in a forward direction and in a reverse direction between two end positions, characterized in that said machine is provided with a device for controlling the displacements of said guide (8) in order to tie successive bales, including means (13) for defining a mode of operation in the trial stage and a mode of operation in the automatic performance of a previously recorded reproducible tying programme, operative means (14) in the trial stage for controlling the displacements of said guide by hand in order to tie a first bale by selection of successive step parameters involving in the case of each step at least the time-duration of the step and the direction of displacement, selected from a forward-motion position, a reverse-motion position and a stop position corresponding to an intermediate position of the guide between said end positions, and means (10) whereby said parameters of successive steps are then recorded in the form of a reproducible programme which can be utilized for the following bales.

4. Machine in accordance with claim 3, characterized in that it is provided with means for controlling at will the validation of recording of the parameters of each successive step, in the trial-stage mode of operation, and initiation of steps in step-by-step sequence in the mode of operation involving automatic programme performance.

5. Machine in accordance with claim 3 or 4, characterized in that it is also provided with means (13) for defining a mode of operation in which the displacements of the guide are controlled by hand without recording the parameters of the corresponding steps.

Figure 1

0 115 995

Figure 2

9

Figure 3

11

0 115 995

MODE ?
PROG Ø AUTO

NON
DRAPEAU = 1
OUI

MANU
Ø   AR   AV

Pédale
NON

OUI

Temps nul en mémoire

Temps et signe en mémoire

Temps et signe en mémoire

42

Pédale
NON

OUI

41

Validation du temps

NON
Pédale relâchée
OUI

44   Incrémentation pointeur de pas

PROG
MODE Ø
AUTO

Drapeau = 1

MANU ?
AR   AV   Ø

RECUL

AVANCE

DRAPEAU=Ø

PEDALE
NON
OUI

Exécution d'un pas de prog.   43

La pédale a été relâchée
NON
OUI

Dernier pas de prog?
OUI

MODE ?
Ø
AUTO
PROG

NON

45

Incrémentation Pointeur de PAS

Figure 4

13